# EUROPÄISCHE PATENTSCHRIFT

(11) **EP 2 682 739 B1**
(45) Veröffentlichungstag und Bekanntmachung des Hinweises auf die Patenterteilung: **04.09.2024**
(21) Anmeldenummer: 12175187.9
(22) Anmeldetag: 05.07.2012
(51) Int. Cl.: G01N 17/00

(54) **BEWITTERUNGSPRÜFUNG BEI VERSCHIEDENEN UV-WELLENLÄNGEN VON UV-LICHTEMISSIONSDIODEN**
WEATHERING TEST AT VARIOUS UV-WAVELENGTHS OF UV LIGHT EMITTING DIODES
TEST CLIMATIQUE À DIVERSES LONGUEURS D'ONDE UV DE DIODES ÉLECTROLUMINISCENTES UV

(43) Veröffentlichungstag der Anmeldung: 08.01.2014
(73) Patentinhaber: Atlas Material Testing Technology GmbH, 63589 Linsengericht/Altenhasslau (DE)
(72) Erfinder: Rudolph, Bernd, 63755 Alzenau (DE); March, Peter, 60326 Frankfurt am Main (DE)
(74) Vertreter: Lambsdorff & Lange Patentanwälte Partnerschaft mbB

(56) Entgegenhaltungen:
- WO-A2-02/12127
- DE-B3- 10 350 020
- US-A1- 2004 075 065

## Beschreibung

Die vorliegende Erfindung betrifft ein Verfahren zur künstlichen Bewitterung oder Lichtechtheitsprüfung von Proben.

In Vorrichtungen zur künstlichen Bewitterung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung oder Lichtechtheitsprüfung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als bislang Strahlungsquelle Xenon-Strahler eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsprüfgeräten wird als Strahlungsquelle zumeist eine Xenon-Lampe eingesetzt. Mit dieser kann zwar bekanntermaßen das Sonnenspektrum recht gut simuliert werden, die emittierte Strahlung weist jedoch einen relativ hohen Spektralanteil im infraroten Spektralbereich auf, der zur Vermeidung von zu großer Aufheizung der Proben durch Filter unterdrückt werden muss. Eine handelsübliche Xenon-Strahlungsquelle weist zudem nur eine Lebensdauer von ca. 1500 Stunden auf.

Des Weiteren kann als Strahlungsquelle auch eine Metallhalogenidlampe eingesetzt werden, die jedoch den Nachteil aufweist, dass sie nicht oder nur sehr schwer regelbar ist. Dasselbe gilt auch für Fluoreszenz-Lampen, die ebenfalls bereits als Strahlungsquellen in Bewitterungsprüfgeräten eingesetzt wurden und denen nachteilhaft eine relativ kurze Lebensdauer zukommt.

Ein weiterer Nachteil der oben genannten konventionellen Strahlungsquellen von Bewitterungsprüfgeräten besteht darin, dass diese entsprechend ihrer Konstruktion und ihrer Ansteuerung relativ unhandlich sind und somit beispielsweise veränderten Bedingungen hinsichtlich der Probenoberflächen der zu bestrahlenden Werkstoffproben nicht angepasst werden können.

Die Druckschrift DE 103 50 020 B3 offenbart eine Vorrichtung zur künstlichen Bewitterung von Proben, bei welcher UV-Lichtemissionsdioden als Strahlungsquelle zum Einsatz kommen. Mit diesen kann der UV-Anteil des Sonnenspektrums insbesondere dadurch gut angenähert werden, indem verschiedene Sorten von UV-Lichtemissionsdioden mit verschiedenen Emissionscharakteristika verwendet werden. Es kann das gesamte Feld von Lichtemissionsdioden in Teilfeldern aufgeteilt sein, wobei in jedem Teilfeld mindestens eine Lichtemissionsdiode von jeder verwendeten spektralen Sorte enthalten ist.

Die Druckschrift WO 02/12127 A2 beschreibt UV-Lichtemissionssysteme für den Einsatz in Wasseraufbereitungsanlagen.

Die Druckschrift US 2004/0075065 A1 beschreibt eine Projektionsvorrichtung zum Bestrahlen eines Objekts mit UV-Strahlung von einer Mehrzahl von UV-LEDs . Die beschriebene Vorrichtung soll in erster Linie zu Bräunungszwecken dienen, kann aber auch zur zerstörungsfreien Prüfung benutzt werden.

Es ist somit Aufgabe der vorliegenden Erfindung, ein Verfahren zur künstlichen Bewitterung oder Lichtechtheitsprüfung von Proben anzugeben, mit welchem die Wirkung der UV-Strahlung im Sonnenspektrum in spektraler Hinsicht besser analysiert werden kann.

Diese Aufgabe wird mit den Merkmalen des unabhängigen Patentanspruchs 1 gelöst. Eine vorteilhafte Ausgestaltung der Erfindung ist Gegenstand des Unteranspruchs 2.

Eine wesentliche Erkenntnis der vorliegenden Erfindung besteht darin, dass bei vielen zu untersuchenden Werkstoffproben das Alterungsverhalten oder die Änderung der Lichtechtheit bei UV-Bestrahlung nicht nur von der Intensität sondern auch von der spektralen Charakteristik der UV-Strahlung abhängt. Insbesondere Proben aus organischem Material weisen zumeist eine Lichtempfindlichkeit auf, die eine signifikante Abhängigkeit von der Photonenenergie der UV-Strahlung zeigt. Zur Verbesserung der Analyse kann es sich somit als vorteilhaft erweisen, eine Möglichkeit zu schaffen, die Bestrahlung bei einer oder mehreren bestimmten Wellenlängen oder Emissionsbanden des UV-Spektrums durchführen zu können.

Nachfolgend wird die Erfindung anhand eines erfindungsgemäßen Verfahrens zur künstlichen Bewitterung oder Lichtechtheitsprüfung von Proben. Gemäß einer Ausführungsform des erfindungsgemäßen Verfahrens weist die UV-Strahlungsvorrichtung für jede Emissionsbande eine Klasse mit einer Mehrzahl von UV-LEDs auf. Es können dann die UV-LEDs einer Emissionsbande so angeordnet sein und/oder so angesteuert werden, dass im Bereich der mindestens einen Probe eine ortsabhängige Variation der Strahlungsintensität innerhalb vorgegebener Grenzen liegt. Es sind demgemäß innerhalb der UV-Strahlungsvorrichtung eine Anzahl von drei oder mehr Klassen von UV-LEDs verschiedener Emissionsbanden vorhanden.

Dabei kann vorgesehen sein, dass in jeder Klasse die UV-LEDs räumlich gleichmäßig verteilt auf einer Fläche angeordnet sind. In diesem Fall können die UV-LEDs derart angesteuert werden, dass sie UV-Strahlung mit gleicher Strahlungsleistung emittieren. Wenn die Probenebene weit genug von der Ebene der UV-LEDs beabstandet ist, so bewirkt die Überlagerung benachbarter UV-Strahlungskegel im Bereich der Probenebene, dass die Strahlungsintensität entlang der Probenebene keinen signifikanten Schwankungen unterworfen ist. Es kann jedoch auch der Fall sein, dass die UV-LEDs zumindest einer Klasse nicht mit ausreichender räumlicher Gleichmäßigkeit auf einer Fläche angeordnet werden können. In diesem Fall kann es sein, dass beim Betrieb mit gleichen Strahlungsleistungen jeder der UV-LEDs der Klasse eine zu große ortsabhängige Variation der Strahlungsintensität in der Probenebene auftritt. Falls diese Variation einen vorgegebenen Schwellwert übersteigt, so kann beispielsweise vorgesehen sein, dass die UV-LEDs dieser Klasse so angesteuert werden, dass sie ihre UV-Strahlung mit derart unterschiedlichen Strahlungsleistungen emittieren, dass die ortsabhängige Variation der Strahlungsintensität in der Probenebene kompensiert wird oder zumindest so weit reduziert wird, dass die genannten vorgegebenen Grenzen bzw. Schwellwerte wieder eingehalten werden.

Gemäß einer Ausführungsform des erfindungsgemäßen Verfahrens kann die räumliche Lage der UV-LEDs innerhalb der Bewitterungskammer verändert werden. Insbesondere kann vorgesehen sein, dass während des Vorgangs des Bestrahlens der Probe einzelne oder alle UV-LEDs einer Klasse in Bezug auf die Probe räumlich verändert werden, also beispielsweise in lateraler Richtung parallel zur Ebene der UV-LEDs in bestimmter Weise hin und her bewegt werden oder eine andere Art regelmäßiger Bewegung wie kreisender Bewegung auszuführen. Dies kann gegebenenfalls ergänzend zu den bereits genannten Maßnahmen vorgenommen werden, um eine möglichst räumlich homogene Strahlungsintensität innerhalb der Probenebene während des Vorgangs des Bestrahlens zu ermöglichen.

Gemäß einer Ausführungsform des erfindungsgemäßen Verfahrens emittieren die UV-LEDs die UV-Strahlung als cw-Strahlung, also mit zeitlich konstanter Strahlungsleistung.

Gemäß einer anderen Ausführungsform des erfindungsgemäßen Verfahrens emittieren die UV-LEDs die UV-Strahlung mit zeitlich variierender Strahlungsleistung, also beispielsweise in gepulster Form mit regelmäßigen Pulszügen. Dies kann beispielsweise dann vorgesehen sein, wenn es darauf ankommt, bestimmte Alterungseffekte zu analysieren, die in nichtlinearer Weise mit der Strahlungsleistung verknüpft sind. In diesem Fall kann es darauf ankommen, dass die UV-LEDs möglichst kurze Pulse mit möglichst hoher Spitzenleistung emittieren.

Gemäß einer Ausführungsform des erfindungsgemäßen Verfahrens wird eine Mehrzahl von Proben innerhalb der Bewitterungskammer in einer dafür vorgesehenen Probenebene angeordnet und parallel mit UV-Strahlung einer Klasse von UV-LEDs bestrahlt. Gemäß einer Ausführungsform des erfindungsgemäßen Verfahrens wird die mindestens eine Probe bei jeder der verschiedenen Emissionsbanden mit einer vorgegebenen Strahlungsintensität und für eine vorgegebene Zeitdauer bestrahlt, um solchermaßen beispielsweise eine Bewitterungsprüfung mit einem Zeitraffer durchzuführen. Es ist dabei ein erfindungsgemäßes Ziel, die Einwirkung natürlicher Sonnenstrahlung möglichst genau zu simulieren. Das Sonnenspektrum weist jedoch im UV-Bereich eine charakteristische Kante bei ca. 300 nm auf. Es ist somit erfindungsgemäß vorgesehen, dass die erfindungsgemäß vorgesehenen Emissionsbanden der UV-LEDs spektral im Bereich der UV-Kante liegen und somit ihre Maxima bei Wellenlängen liegen, die im Sonnenspektrum mit verschiedenen Intensitäten vertreten sind. Dieser Tatsache wird erfindungsgemäß dadurch Rechnung getragen, indem entweder die Strahlungsleistungen der UV-LEDs entsprechend den Verhältnissen im Sonnenspektrum eingestellt werden oder die Zeitdauern der Bestrahlung entsprechend eingestellt werden, wobei es auch möglich ist, beide Maßnahmen zu ergreifen.

Eine beispielhafte Vorrichtung zur künstlichen Bewitterung oder Lichtechtheitsprüfung von Proben weist eine Bewitterungskammer auf, in welcher eine UV-Strahlungsvorrichtung angeordnet ist und mindestens eine Probe anordenbar ist. Die UV-Strahlungsvorrichtung enthält eine Mehrzahl von UV-Lichtemissionsdioden (UV-LEDs), welche UV-LEDs verschiedener Emissionsbanden aufweist. Die UV-LEDs sind derart ansteuerbar, dass jeweils UV-LEDs einer bestimmten Emissionsbande unabhängig von UV-LEDs der anderen Emissionsbanden gemeinsam ein- und ausschaltbar sind.

Eine beispielhafte UV-Strahlungsvorrichtung weist eine Mehrzahl von UV-Lichtemissionsdioden (UV-LEDs) enthaltend drei oder mehr Klassen von UV-LEDs verschiedener Emissionsbanden auf, wobei die UV-LEDs derart ansteuerbar sind, dass jeweils UV-LEDs einer bestimmten Emissionsbande unabhängig von UV-LEDs der anderen Emissionsbanden gemeinsam ein- und ausschaltbar sind.

Gemäß einer Ausführungsform der beispielhaften Vorrichtungen enthält die UV-Strahlungsvorrichtung eine Anzahl von drei oder mehr Klassen von UV-LEDs, wobei innerhalb jeder Klasse die UV-LEDs die gleiche Emissionscharakteristik aufweisen bzw. die gleichen Emissionsbanden der emittierten UV-Strahlung aufweisen.

Gemäß einer nicht zur Erfindung gehörigen Vorrichtung ist die Gesamtheit der UV-LEDs entlang den Zeilen und Spalten einer Matrix angeordnet.

Gemäß einer nicht zur Erfindung gehörigen Vorrichtung ist die Gesamtheit der UV-LEDs auf einer ebenen Fläche räumlich verteilt angeordnet und in einer davon beabstandeten Probenebene ist mindestens eine Probe anordenbar. In der Probenebene kann eine Aufnahmefläche vorhanden sein, auf der die Probe oder die Proben beispielsweise in dafür vorgesehenen Bereichen aufgenommen werden können. Diese Bereiche können derart vorgesehen sein, dass Proben bestimmter Normgrößen darin aufgenommen werden können.

Erfindungsgemäß sind bei einer in dem Verfahren verwendeten UV-Strahlungsvorrichtung die UV-LEDs räumlich ungleichmäßig verteilt. Dies ist derart ausgestaltet, dass die UV-LEDs in Form von Ansammlungen von drei, vier oder mehr UV-LEDs, insbesondere in Form von Tripeln, Quadrupeln oder n-Tupeln (n = natürliche Zahl) angeordnet sind. Diese Ansammlungen von UV-LEDs sind dann ihrerseits regelmäßig über die Fläche verteilt. Innerhalb jeder Ansammlung wie jedes Tripels oder Quadrupels kann dann beispielsweise genau eine UV-LED von jeder Klasse der Klassen verschiedener Emissionscharakteristika vertreten sein. Auch hierzu wird weiter unter ein Ausführungsbeispiel zur näheren Erläuterung gezeigt werden.

Gemäß einer Ausführungsform der beispielhaften Vorrichtungen sind die UV-LEDs einer Klasse bzw. einer bestimmten Emissionsbande derart ansteuerbar und/oder räumlich verteilt angeordnet, dass in der Probenebene eine vorgegebene ortsabhängige Strahlungsintensität erzielbar ist, deren ortsabhängige Variation innerhalb vorgegebener Grenzen oder Schwellwerte liegt. Dabei kann insbesondere vorgesehen sein, dass die UV-LEDs einer Klasse bzw. einer bestimmten Emissionsbande derart räumlich verteilt angeordnet sind, dass bereits mit gleichen Strahlungsleistungen der UV-LEDs eine hinreichende räumliche Homogenität der Strahlungsintensität innerhalb der Probenebene erzielbar ist. Es kann vorgesehen sein, dass dies für alle Klassen von UV-LEDs gilt.

Im Folgenden wird die Erfindung anhand von Ausführungsbeispielen in Verbindung mit den Zeichnungsfiguren noch näher erläutert. Es zeigen:
Fig. 1 eine nicht zur Erfindung gehörige Vorrichtung zur künstlichen Bewitterung oder Lichtechtheitsprüfung von Proben in einer perspektivischen Ansicht.
Fig. 2 eine Draufsicht auf eine nicht zur Erfindung gehörige UV-Strahlungsvorrichtung enthaltend eine Mehrzahl von UV-LEDs.
Fig. 3 ein Wellenlängen-Intensitäts-Diagramm zur schematischen Darstellung der Anstiegsflanke des UV-Anteils des Sonnenspektrums und der Emissionsspektren von vier UV-LEDs.
Fig. 4 eine Draufsicht auf eine beispielhafte UV-Strahlungsvorrichtung enthaltend eine Mehrzahl von UV-LEDs gemäß einer Ausführungsform.

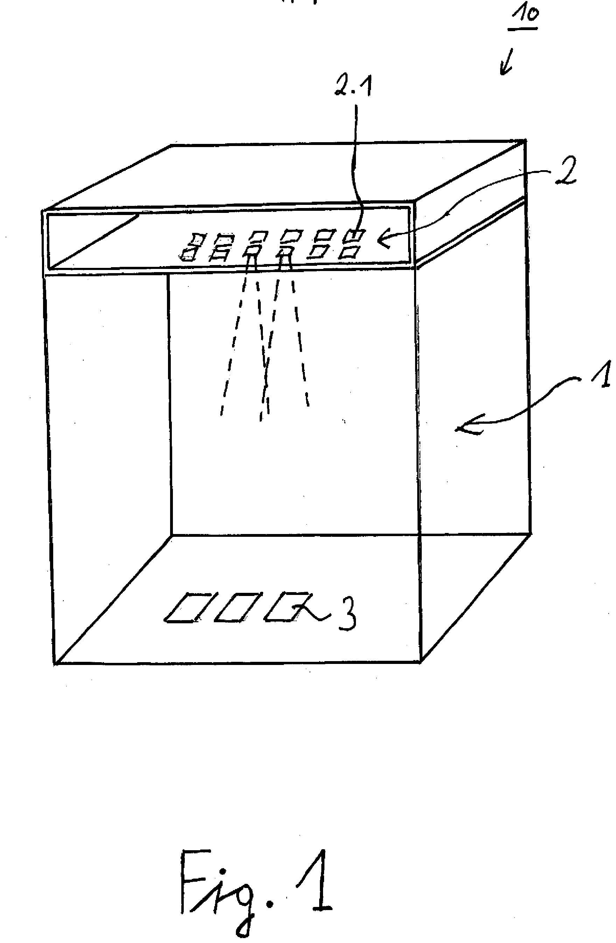

In der Fig. 1 ist eine Vorrichtung zur künstlichen Bewitterung oder Lichtechtheitsprüfung schematisch perspektivisch dargestellt. Die Vorrichtung 10 weist eine Probenkammer 1 auf, in welcher eine nicht zur Erfindung gehörige UV-Strahlungsvorrichtung 2 angeordnet ist. Im unteren Bereich der Probenkammer 1 sind auf einer Bodenplatte geeignete Halterungsmittel vorhanden, mittels derer eine Anzahl Proben 3 gehaltert werden können. Die Vorrichtung ist somit als ein Bewitterungsgerät mit stationärer Probenhalterung ausgelegt. Die Erfindung ist jedoch ebenso auf Bewitterungsgeräte mit bewegbaren Probenhalterungen anwendbar.

Die UV-Strahlungsvorrichtung 2 weist in nicht zur Erfindung gehöriger Weise eine Mehrzahl von UV-LEDs 2.1 auf, die entlang den Zeilen und Spalten einer Matrix auf einer ebenen Fläche, wie beispielsweise einer Schaltungsplatine, montiert sind und bezüglich ihrer Abstrahlcharakteristik derart ausgerichtet sind, dass die Emissionsstrahlung senkrecht nach unten auf die zu untersuchenden Proben 3 gerichtet ist. In einer praktikablen Ausführungsform kann die Schaltungsplatine mit den auf ihrer unteren Oberfläche befestigten UV-LEDs als Teil einer Einschubkassette vorgesehen sein, welche in einen dafür vorgesehenen Schlitz auf der Oberseite der Vorrichtung 10 eingeschoben werden kann. Die Schaltungsplatine bildet dabei eine untere Bodenfläche der Einschubkassette, während der darüber gelegene Raumbereich von einem Kühlmedium durchströmt werden kann, um die von den UV-LEDs erzeugte Wärme effizient abzuführen.

Die Vorrichtung 10 kann selbstredend weitere Elemente enthalten, welche der Bewitterung der Proben dienen und hier lediglich aus Gründen der Einfachheit der Darstellung nicht gezeigt sind.

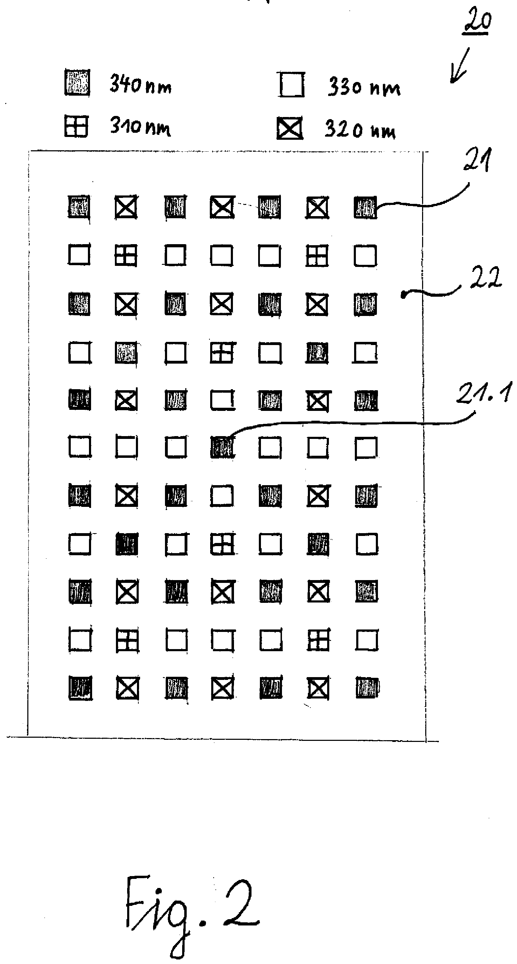

In der Fig. 2 ist eine Draufsicht auf eine nicht zur Erfindung gehörige UV-Strahlungsvorrichtung gemäß einer Ausführungsform gezeigt. Die UV-Strahlungsvorrichtung 20 weist eine Mehrzahl von UV-LEDs 21 auf, welche entlang der Zeilen und Spalten einer Matrix angeordnet und auf einer flächigen Unterlage 22 wie einer Schaltungsplatine montiert sind. In der Mehrzahl von UV-LEDs 21 sind genau vier Klassen von UV-LEDs 21 verschiedener Emissionsbanden enthalten. Diese Emissionsbanden können so beschaffen sein, dass die Maxima bei Wellenlängen von 310 nm, 320 nm, 330 nm und 340 nm liegen.

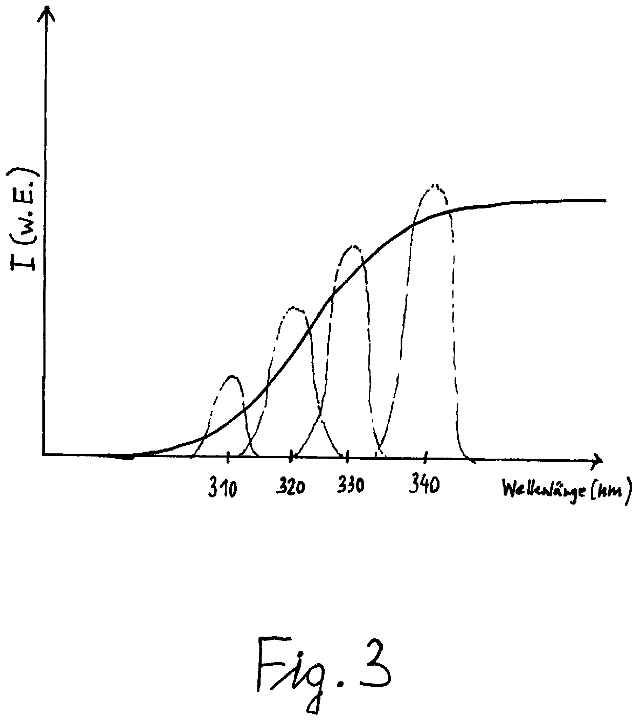

In der Fig. 3 ist gezeigt, wo die Emissionsbanden der vier Klassen von UV-LEDs 21 in Bezug auf die Anstiegsflanke des UV-Anteils des Sonnenspektrums spektral zu liegen kommen. Man sieht, dass bei der Wellenlänge von 310 nm die Intensität im Sonnenspektrum noch auf einem relativ niedrigem Niveau liegt und dann bei den weiteren Wellenlängen 320 nm, 330 nm und 340 nm dann schrittweise höhere Intensitäten im Sonnenspektrum vorhanden sind.

Da erfindungsgemäß dem variierenden spektralen Verlauf innerhalb des Sonnenspektrums Rechnung getragen werden soll, so gibt es im Grunde die folgenden zwei Möglichkeiten. Entweder man führt die Messungen bei den einzelnen Emissionsbanden mit gleichen Strahlungsintensitäten jedoch verschiedenen Zeitdauern der Bestrahlung durch oder die Zeitdauern der Bestrahlung sind gleich, jedoch die Strahlungsintensitäten zwischen den Emissionsbanden unterschiedlich. Wie man anhand der Fig. 3 sehen kann, wird bei dieser Ausführungsform der letzteren Variante gefolgt. Von den insgesamt 77 auf der Schaltungsplatine 22 angeordneten UV-LEDs 21 weisen 29 ein Wellenlängenmaximum bei 340 nm auf, 26 einen Wellenlängenmaximum bei 330 nm, 16 ein Wellenlängenmaximum bei 320 nm und 6 ein Wellenlängenmaximum bei 310 nm. Somit können also die UV-LEDs bei der Wellenlänge 340 nm, die die relativ stärkste Intensität im Sonnenspektrum besitzt, zahlenmäßig in der UV-Strahlungsvorrichtung 20 am stärksten vertreten sein und mit abnehmender Wellenlänge - entsprechend geringerer Intensität im Sonnenspektrum - sinkt auch die jeweilige Anzahl der UV-LEDs.

Es ist vorgesehen, dass die UV-LEDs 21 einer Klasse unabhängig von den UV-LEDs der anderen Klassen ein- und ausschaltbar sind. Wenn jede der UV-LEDs 21 mit der gleichen Strahlungsleistung emittiert, dann stehen die Gesamtstrahlungsleistungen der Klassen von UV-LEDs in einem Verhältnis zueinander, wie es relativ gut dem Verhältnis der Intensitäten der entsprechenden Wellenlängen im Sonnenspektrum entspricht. Somit können bei dieser Ausführungsform Untersuchungen an Proben durchgeführt werden, bei welchen die Proben einzeln nacheinander mit UV-Licht der einzelnen Klassen von UV-LEDs 21 ausgesetzt werden und die Gesamtbestrahlungszeiten einander gleich sein können.

Ein weiteres zu lösendes Problem besteht darin, dass mit den über eine Fläche verteilten UV-LEDs jeder der vier Klassen eine in einer Entfernung davon beabstandete mit Proben 3 bestückte Fläche mit möglichst geringer Variation der Strahlungsintensität auf Probenebene bestrahlt werden kann. Dies kann gemäß der Ausführungsform der Fig. 2 dadurch erreicht, dass die UV-LEDs 21 innerhalb jeder der vier Klassen regelmäßig auf der Schaltungsplatine 22 angeordnet sind, wobei die regelmäßige Anordnung in einer Punktsymmetrie bezüglich einer zentralen UV-LED 21.1 besteht. Mit dieser räumlichen Anordnung kann eine gute räumliche Homogenität der Strahlungsintensität auf Probenebene erreicht werden. Sollte sich erweisen, dass bei gleicher Strahlungsleistung der UV-LEDs innerhalb einer Klasse an bestimmten Punkten auf der Probenebene eine zu starke räumliche Variation der Strahlungsintensität besteht, so kann dies noch dadurch kompensiert oder zumindest reduziert werden, indem einzelne der UV-LEDs derart angesteuert werden, dass sie eine geringere oder eine höhere Strahlungsleistung erbringen als die übrigen UV-LEDs der Klasse. Zu diesem Zweck kann vorgesehen sein, dass die UV-LEDs 21 auch individuell regelbar sind.

Es können auch andere nicht zur Erfindung gehörige Anordnungen der UV-LEDs 21 gewählt werden als die der Vorrichtung der Fig. 2. So kann beispielsweise auch eine punktsymmetrische Anordnung der UV-LEDs 21 der einzelnen Klassen gewählt werden, bei der der Symmetriepunkt nicht in einer UV-LED wie der UV-LED 21.1 der Fig. 2 besteht, sondern ein in einem Zwischenraum zwischen UV-LEDs gelegener Punkt ist.

Eine weitere zur Anordnung der Fig. 2 alternative Anordnung könnte darin bestehen, dass die Anzahl der UV-LEDs bei den genannten vier Emissionsbanden bzw. Klassen gleich ist, die einzelnen Bestrahlungsvorgänge der Proben jedoch mit unterschiedlichen Gesamtzeitdauern der Bestrahlung durchgeführt werden, um solchermaßen der verschiedenen spektralen Intensitäten der Wellenlängen im Sonnenspektrum Rechnung zu tragen.

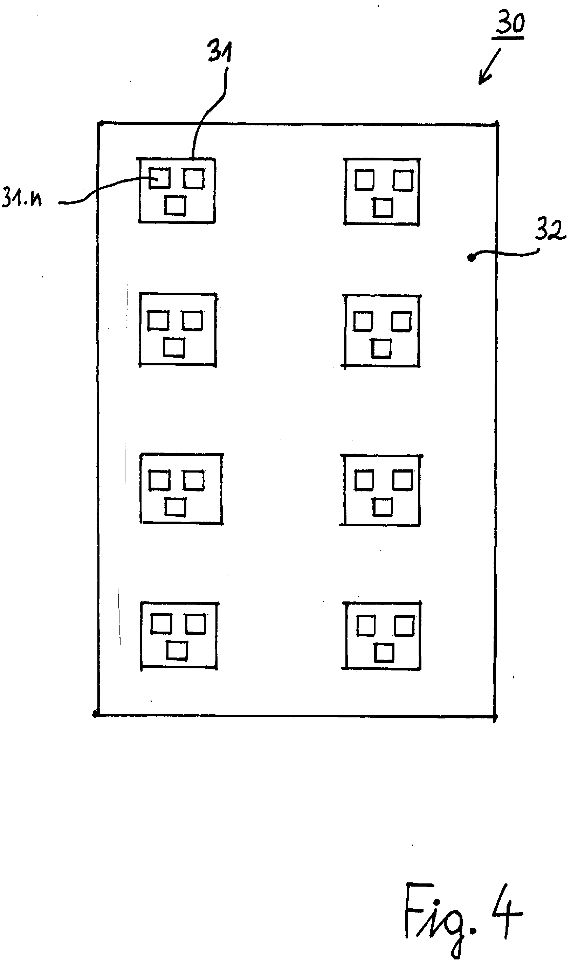

In der Fig. 4 ist eine Draufsicht auf eine beispielhafte UV-Strahlungsvorrichtung gemäß einer Ausführungsform gezeigt. Die UV-Strahlungsvorrichtung 30 weist eine Mehrzahl von UV-LEDs 31.n auf, welche auf einer flächigen Unterlage 32 wie einer Schaltungsplatine montiert sind. Die UV-LEDs 31.n sind im Unterschied zu der Anordnung der Fig. 2 nicht räumlich gleich verteilt, sondern in Gruppen 31 zusammengefasst, wobei die Gruppen 31 identisch gebildet sind. Im dargestellten Ausführungsbeispiel können die Gruppen jeweils 3 UV-LEDs 31.n verschiedener UV-Emissionsbanden enthalten. Es können aber in jeder der Gruppen auch mehr als drei UV-LEDs verschiedener UV-Emissionsbanden enthalten sein, beispielsweise vier Gruppen mit Emissionsbanden, wie sie in Fig. 3 dargestellt sind und für die Simulation der UV-Anstiegskante der Sonnenstrahlung verwendet werden. Gegebenenfalls können in den Gruppen auch UV-LEDs bestimmter Klassen, also bestimmter UV-Emissionsbanden, mehrfach vertreten sein.

Es ist ferner vorgesehen, dass die UV-LEDs 31.n innerhalb einer Gruppe derart voneinander beabstandet sind, dass die Abstände vernachlässigbar gegenüber dem Abstand der UV-Strahlungsvorrichtung 30 zur Probenebene ist. Dies hat zur Folge, dass jede Gruppe 31 für sich genommen auf der Probenebene ein in der gewünschten Weise gemischtes ("fertiges") Spektrum erzeugt. Als Abstand der UV-LEDs 31.n voneinander kann beispielsweise ein Mittelwert der Mittelpunkts-Abstände von jeweils unmittelbar benachbarten UV-LEDs bestimmt werden und dieser Abstand kann kleiner sein als das 10-fache, 50-fache oder 100-fache des Abstands zwischen der UV-Strahlungsvorrichtung 30 und der Probenebene.

Obwohl spezifische Ausführungsformen in dieser Beschreibung dargestellt und beschrieben wurden, ist für den Fachmann auf dem Gebiet zu erkennen, dass die gezeigten und beschriebenen spezifischen Ausführungsformen gegen eine Vielfalt von alternativen und/oder äquivalenten Implementierungen ausgetauscht werden können, ohne vom Schutzbereich der vorliegenden Erfindung abzuweichen. Diese Anmeldung soll jegliche Anpassungen oder Veränderungen der hierin erörterten spezifischen Ausführungsformen abdecken. Daher ist vorgesehen, dass diese Erfindung nur durch die Ansprüche begrenzt ist.

## Patentansprüche

1. Verfahren zur künstlichen Bewitterung oder Lichtechtheitsprüfung von Proben, mit den Schritten:
a. Bereitstellen einer Bewitterungskammer (10), welche eine UV-Strahlungsvorrichtung (30) mit UV-Lichtemissionsdioden (UV-LED) (31.n) verschiedener Emissionsbanden enthält;
b. Anordnen mindestens einer Probe in der Bewitterungskammer (1) in einem Abstand von den UV-LEDs (31.n);
c. Bestrahlen der Probe mit Strahlung von mindestens einer UV-LED (31.n) einer bestimmten Emissionsbande;
d. Analysieren der Veränderungen der Probe aufgrund der Bestrahlung; und
e. Durchführen der Schritte c. und d. mit einer oder mehreren UV-LEDs (31.n) von einer oder mehreren weiteren Emissionsbanden;
wobei für die Durchführung des Verfahrens eine Vorrichtung verwendet wird, welche aufweist eine Bewitterungskammer (1), in welcher eine UV-Strahlungsvorrichtung (30) angeordnet ist, und in welcher in einer von der UV-Strahlungsvorrichtung beabstandeten Probenebene mindestens eine Probe (3) anordenbar ist, wobei
die UV-Strahlungsvorrichtung (30) eine Mehrzahl von UV-Lichtemissionsdioden (UV-LEDs) (31.n) enthaltend drei oder mehr Klassen von UV-LEDs (31.n) verschiedener Emissionsbanden enthält, die spektral derart gewählt sind, dass in der Probenebene eine Spektralverteilung erzielt wird, mit der die Anstiegsflanke des UV-Anteils des Sonnenspektrums simuliert wird, wobei
die UV-LEDs (31.n) in Gruppen (31) zu je 3 oder mehr UV-LEDs (31.n) zusammengefasst sind, wobei die Gruppen (31) identisch gebildet sind, und wobei
die Gruppen (31) auf einer ebenen Fläche räumlich regelmäßig verteilt und getrennt voneinander angeordnet sind, und
in jeder Gruppe (31) mindestens eine UV-LED (31.n) aus jeder der verschiedenen Emissionsbanden vertreten ist, und wobei als Abstand der UV-LEDs (31.n) voneinander innerhalb einer Gruppe (31) ein Mittelwert der Mittelpunkts-Abstände von jeweils unmittelbar benachbarten UV-LEDs (31.n) bestimmt wird und dieser Abstand kleiner als der Abstand zwischen der UV-Strahlungsvorrichtung (30) und der Probenebene ist.

2. Verfahren nach Anspruch 1, bei welchem
die verschiedenen Emissionsbanden im Bereich einer im Sonnenspektrum natürlicher Sonnenstrahlung enthaltenen charakteristischen Kante im UV-Bereich bei ca. 300 nm liegen und somit ihre Maxima bei Wellenlängen liegen, die im Spektrum mit verschiedenen Intensitäten vertreten sind, und
dieser Tatsache dadurch Rechnung getragen wird, indem die Strahlungsleistungen der UV-LEDs der verschiedenen Emissionsbanden entsprechend den Verhältnissen im Sonnenspektrum eingestellt werden.

## Claims

1. A method for the artificial weathering or light fastness testing of samples, comprising the steps of
a. Providing a weathering chamber (10) containing a UV radiation device (30) with UV light emitting diodes (UV-LED) (31.n) of different emission bands;
b. Placing at least one sample in the weathering chamber (1) at a distance from the UV LEDs (31.n);
c. Irradiating the sample with radiation from at least one UV LED (31.n) of a particular emission band;
d. Analysing the changes in the sample due to the irradiation; and
e. Performing steps c. and d. with one or more UV LEDs (31.n) of one or more further emission bands; wherein
an apparatus is used for carrying out the method, which has a weathering chamber (1) in which a UV radiation device (30) is arranged, and in which at least one sample (3) can be arranged in a sample plane spaced from the UV radiation device, wherein the UV radiation device (30) contains a plurality of UV light-emitting diodes (UV LEDs) (31.n) containing three or more classes of UV LEDs (31.n) of different emission bands which are selected spectrally in such a way that a spectral distribution is obtained in the sample plane with which the rising edge of the UV component of the solar spectrum is simulated, wherein
the UV LEDs (31.n) are combined in groups (31) of 3 or more UV LEDs (31.n) each, wherein the groups (31) are formed identically, and wherein
the groups (31) are spatially regularly distributed on a flat surface and arranged separately from one another, and
at least one UV LED (31.n) from each of the different emission bands is represented in each group (31), and wherein
the distance of the UV LEDs (31.n) from one another within a group (31) is determined as an average value of the centre point distances of in each case directly adjacent UV LEDs (31.n) and this distance is smaller than the distance between the UV radiation device (30) and the sample plane.

2. The method according to claim 1, in which
the various emission bands lie in the region of a characteristic edge contained in the solar spectrum of natural solar radiation in the UV range at approximately 300 nm and thus their maxima lie at wavelengths which are represented in the spectrum with different intensities, and
this fact is taken into account by adjusting the radiant power of the UV LEDs of the various emission bands according to the conditions in the solar spectrum.

## Revendications

1. Procédé de vieillissement artificiel ou d'essai de solidité à la lumière d'échantillons, comprenant les étapes suivantes :
a. Fournir une chambre de vieillissement (10) qui contient un dispositif de rayonnement UV (30) avec des diodes d'émission de lumière UV (LED UV) (31.n) de différentes bandes d'émission ;
b. Placer au moins un échantillon dans la chambre de vieillissement (1) à une certaine distance des DEL UV (31.n) ;
c. Exposer l'échantillon au rayonnement d'au moins une DEL UV (31.n) d'une bande d'émission donnée ;
d. Analyser les modifications de l'échantillon dues à l'irradiation ; et
e. Exécution des étapes c. et d. avec une ou plusieurs LED UV (31.n) d'une ou plusieurs autres bandes d'émission ; dans lequel pour la mise en oeuvre du procédé, on utilise un dispositif qui présente une chambre d'exposition aux intempéries (1), dans laquelle est disposé un dispositif de rayonnement UV (30), et dans laquelle au moins un échantillon (3) peut être disposé dans un plan d'échantillon espacé du dispositif de rayonnement UV, où le dispositif de rayonnement UV (30) contient une pluralité de diodes électroluminescentes UV (LED UV) (31.n) contenant trois classes ou plus de LED UV (31.n) de différentes bandes d'émission, qui sont choisies spectralement de telle sorte que l'on obtient dans le plan de l'échantillon une répartition spectrale avec laquelle le flanc de montée de la partie UV du spectre solaire est simulé, où
les LED UV (31.n) sont réunies en groupes (31) de 3 LED UV (31.n) ou plus, les groupes (31) étant formés de manière identique, et dans lequel
les groupes (31) sont répartis régulièrement dans l'espace sur une surface plane et sont disposés séparément les uns des autres, et
dans chaque groupe (31), au moins une LED UV (31.n) de chacune des différentes bandes d'émission est représentée, et où on détermine comme distance entre les DEL UV (31.n) à l'intérieur d'un groupe (31) une valeur moyenne des distances entre les centres de DEL UV (31.n) respectivement directement voisines et cette distance est inférieure à la distance entre le dispositif de rayonnement UV (30) et le plan de l'échantillon.

2. Procédé selon la revendication 1, dans lequel
les différentes bandes d'émission se situent dans la zone d'une arête caractéristique du spectre solaire du rayonnement solaire naturel dans le domaine UV à environ 300 nm et que leurs maxima se situent ainsi à des longueurs d'onde qui sont représentées dans le spectre avec des intensités différentes, et que
ce fait est pris en compte par le fait que les puissances de rayonnement des LED UV des différentes bandes d'émission sont réglées en fonction des conditions du spectre solaire.
